# EUROPEAN PATENT APPLICATION

(11) **EP 4 506 159 A1**
(43) Date of publication of application: **12.02.2025**
(21) Application number: 23784760.3
(22) Date of filing: 04.04.2023
(51) Int. Cl.: B32B 9/00, B65D 65/40

(54) **GAS BARRIER LAMINATE, PACKAGING FILM, PACKAGING CONTAINER, AND PACKAGED PRODUCT**

(30) Priority: 08.04.2022 JP 2022064387
(71) Applicant: Toppan Holdings Inc., Tokyo 110-0016 (JP)
(72) Inventor: MAEDA Masaki, Tokyo 110-0016 (JP)
(74) Representative: Hoffmann Eitle
(86) International application number: PCT/JP2023/013992
(87) International publication number: WO 2023/195474

(57) **Abstract**

A gas barrier laminate includes a substrate layer containing a resin, an inorganic oxide layer, and a gas barrier coat layer in this order. The gas barrier coat layer is a cured article of a composition, and the composition contains a water-soluble polymer, a first silicon compound composed of a silicon alkoxide in formula (1) below, and a second silicon compound composed of a silicon alkoxide in formula (2) below. The ratio of the water-soluble polymer to the water-soluble polymer and the second silicon compound is 55 to 95% by mass, and the ratio of the first silicon compound to the first silicon compound and the second silicon compound is more than 0% by mass and 89% by mass or less. Si(OR¹)₄ ... (1) (R²Si(OR³)₃)ₙ ... (2) (in formulas (1) and (2) above, R¹ and R³ each denote an alkyl group, and R² denotes an organic functional group; n represents an integer equal to or greater than 1).

## Description

### [Technical Field]

The present disclosure relates to a gas barrier laminate, a packaging film, a packaging container, and a packaged product.

### [Background Art]

Packaging containers such as packaging bags used for packaging food or pharmaceutical products are needed to have gas barrier properties for protecting the contents from water vapor, oxygen, and other gases that may degrade the contents, in order to prevent the contents from suffering degradation or spoilage, and retain the functions and nature of the contents. Conventional packaging containers thus include a gas barrier laminate.

A typical gas barrier laminate includes a substrate layer, an inorganic oxide layer, and a gas barrier coat layer in this order, and the gas barrier coat layer is formed by coating the inorganic oxide layer with a gas barrier coat layer forming composition that may provide a gas barrier function, and curing the composition.

Various gas barrier laminates with such a structure have been conventionally disclosed.

For example, Patent Literature 1 below discloses a barrier laminate including a multilayered substrate, a vapor-deposition film, and a barrier coat layer provided on the vapor-deposition film, in which the barrier coat layer is a gas barrier coating film composed of a resin composition including a metal alkoxide, a water-soluble polymer, and a silane coupling agent.

### [Citation List]

### [Patent Literature]

[PTL 1] JP 6902231 B

### [Summary of the Invention]

### [Technical Problem]

However, the gas barrier laminate described in Patent Literature 1 above involves an issue as described below.

That is, the gas barrier laminate described in Patent Literature 1 above has room for improvement in both the laminate strength after retorting and the oxygen barrier properties after retorting and abuse.

The present disclosure has been made in view of the above issue, and an object of the disclosure is to provide a gas barrier laminate having good laminate strength after retorting and also good oxygen barrier properties after retorting and abuse, a packaging film, a packaging container, and a packaged product.

### [Solution to Problem]

To resolve the above issue, a first aspect of the present disclosure provides a gas barrier laminate including: a substrate layer containing a thermoplastic resin; an inorganic oxide layer; and a gas barrier coat layer in this order, in which the gas barrier coat layer is a cured article of a gas barrier coat layer forming composition, the gas barrier coat layer forming composition contains a water-soluble polymer, a first silicon compound composed of at least one of a silicon alkoxide represented by general formula (1) below and hydrolysates thereof, and a second silicon compound composed of at least one of a silicon alkoxide represented by general formula (2) below and hydrolysates thereof, the water-soluble polymer has a mass ratio of 55 to 95% by mass relative to the total mass of the water-soluble polymer and the second silicon compound when the second silicon compound is converted to (R²Si(OH)₃)ₙ, and the first silicon compound has a mass ratio of more than 0% by mass and 89% by mass or less relative to the total mass of the first silicon compound and the second silicon compound when the first silicon compound is converted to SiO₂ and the second silicon compound is converted to (R²Si(OH)₃)ₙ:

Si(OR¹)₄ ... (1)

(R²Si(OR³)₃)ₙ ... (2)

(in formulas (1) and (2) above, R¹ and R³ each denote an alkyl group or -C₂H₄OCH₃, and R² denotes an organic functional group; n represents an integer equal to or greater than 1).

The gas barrier laminate according to the present disclosure has good laminate strength after retorting and also good oxygen barrier properties after retorting and abuse.

The reason why the gas barrier laminate according to the current disclosure provides such effects is not known, but it is speculated that the thermoplastic resin contained in the substrate layer and the water-soluble polymer, the first silicon compound, and the second silicon compound being well balanced in the gas barrier coat layer may increase the laminate strength of the gas barrier coat layer to the substrate layer to improve the adhesion between the substrate layer and the gas barrier coat layer and also provide the gas barrier coat layer with thermal and mechanical durability.

A second aspect of the present disclosure provides a gas barrier laminate according to the first aspect, in which the mass ratio of the first silicon compound relative to the total mass of the first silicon compound and the second silicon compound is 20% by mass or more and 89% by mass or less when the first silicon compound is converted to SiO₂ and the second silicon compound is converted to (R²Si(OH)₃)ₙ.

In this case, the gas barrier coat layer forming composition may be cured to provide the gas barrier laminate with better gas barrier properties.

A third aspect of the present disclosure provides a gas barrier laminate according to the first or second aspect, in which the mass ratio of the water-soluble polymer relative to the total mass of the water-soluble polymer and the second silicon compound is 75 to 90% by mass when the second silicon compound is converted to (R²Si(OH)₃)ₙ.

Such a mass ratio tends to improve the oxygen barrier properties after retorting compared with a water-soluble polymer having a mass ratio outside the above range.

A fourth aspect of the present disclosure provides a gas barrier laminate according to any one of the first to third aspects, in which the thermoplastic resin is a polyolefin resin.

In general, if a packaging container is produced with a gas barrier laminate in which the substrate layer contains a polyolefin resin as a thermoplastic resin, and the packaging container is retorted, then interlaminar separation tends to occur. However, the gas barrier laminate according to the present disclosure includes the gas barrier coat layer having greater laminate strength to the substrate layer, and thus if a packaging container is produced with the gas barrier laminate, and the packaging container is retorted, the gas barrier coat layer does not separate easily from the substrate layer.

A fifth aspect of the present disclosure provides a gas barrier laminate according to any one of the first to fourth aspects, in which the silicon alkoxide in the second silicon compound is trimeric 1,3,5-tris(3-trialkoxysilylalkyl)isocyanurate in which R² in general formula (2) above is NCO-R⁴-, R⁴ is an alkylene group having one or more carbon atoms, and n is 3.

This improves the moist heat resistance of the gas barrier coat layer and also improves the laminate strength (adhesive strength) of the gas barrier coat layer to the substrate layer after retorting.

A sixth aspect of the present disclosure provides a gas barrier laminate according to any one of the first to fourth aspects, in which the silicon alkoxide in the second silicon compound is a 3-glycidoxypropyltrialkoxysilane in which R² in general formula (2) above is a 3-glycidoxypropyl group, and n is 1.

This improves the moist heat resistance of the gas barrier coat layer and also improves the laminate strength (adhesive strength) of the gas barrier coat layer to the substrate layer after retorting.

A seventh aspect of the present disclosure provides a gas barrier laminate according to any one of the first to sixth aspects, further including an anchor coat layer between the substrate layer and the inorganic oxide layer.

In this aspect, the surface of anchor coat layer is smoother than the surface of the substrate layer. This enables the thickness of the inorganic oxide layer to be more uniform, allowing the gas barrier laminate to have higher gas barrier properties. This can improve the adhesion between the gas barrier coat layer and the inorganic oxide layer, preventing interlaminar separation in the gas barrier laminate.

An eighth aspect of the present disclosure provides a packaging film including: a gas barrier laminate according to any one of the first to seventh aspects; and a sealant layer.

The packaging film has good laminate strength after retorting and also good oxygen barrier properties after retorting and abuse because the gas barrier laminate is included.

A ninth aspect of the present disclosure provides a packaging container including a packaging film according to the eighth aspect.

Since the packaging film is included, the gas barrier coat layer does not become detached easily even if the packaging container is filled with contents and then retorted. **In** addition, even if a force deforming the packaging film is applied after retorting, deterioration of contents due to oxygen ingress can be suppressed for an extended period of time.

A tenth aspect of the present disclosure provides a packaged product including: a packaging container according to the ninth aspect; and contents contained in the packaging container.

Since the packaging container is included, the gas barrier coat layer does not become detached easily even if the packaged product is retorted. Furthermore, even if a force deforming the packaging film is applied after retorting, oxygen ingress is suppressed, and deterioration of contents due to oxygen ingress can be suppressed for an extended period of time.

### [Advantageous Effects of the Invention]

The present disclosure provides a gas barrier laminate having good laminate strength after retorting and also good oxygen barrier properties after retorting and abuse, a packaging film, a packaging container, and a packaged product.

### [Brief Description of the Drawings]

Fig. 1 is a cross-sectional view of a gas barrier laminate according to an embodiment of the present disclosure.
Fig. 2 is a cross-sectional view of a packaging film according to an embodiment of the present disclosure.
Fig. 3 is a side view of a packaged product according to an embodiment of the present disclosure.

### [Description of the Embodiments]

Embodiments of the present disclosure are described in detail below.

### <Gas Barrier Laminate>

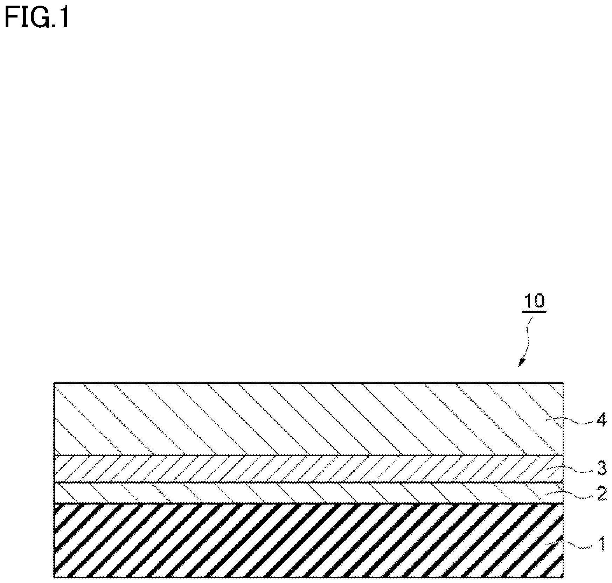

First, a gas barrier laminate according to an embodiment of the present disclosure will now be described with reference to Fig. 1. Fig. 1 is a cross-sectional view of a gas barrier laminate according to an embodiment of the present disclosure. In Fig. 1, a gas barrier laminate 10 includes a substrate layer 1 containing a thermoplastic resin, an inorganic oxide layer 3, and a gas barrier coat layer 4 in this order. The gas barrier coat layer 4 is a cured article of a gas barrier coat layer forming composition, and the gas barrier coat layer forming composition contains a water-soluble polymer, a first silicon compound composed of at least one of a silicon alkoxide represented by general formula (1) below and hydrolysates thereof, and a second silicon compound composed of at least one of a silicon alkoxide represented by general formula (2) and hydrolysates thereof. When the second silicon compound is converted to R²Si(OH)₃, the water-soluble polymer has a mass ratio of 55 to 95% by mass relative to the total mass of the water-soluble polymer and the second silicon compound. When the first silicon compound is converted to SiO₂, and the second silicon compound is converted to R²Si(OH)₃, the first silicon compound has a mass ratio of more than 0% by mass and 89% by mass or less relative to the total mass of the first silicon compound and the second silicon compound:

Si(OR¹)₄ ... (1)

(R²Si(OR³)₃)ₙ ... (2)

(in formulas (1) and (2) above, R¹ and R³ each denote an alkyl group or -C₂H₄OCH₃, and R² denotes an organic functional group; n represents an integer equal to or greater than 1).

The gas barrier laminate 10 may also include an anchor coat layer 2 between the substrate layer 1 and the inorganic oxide layer 3.

The gas barrier laminate 10 has good laminate strength after retorting and also good oxygen barrier properties after retorting and abuse.

The substrate layer 1, the anchor coat layer 2, the inorganic oxide layer 3, and the gas barrier coat layer 4 are described in detail below.

### (Substrate Layer)

The substrate layer 1 is a layer for supporting the gas barrier coat layer 4 and contains a thermoplastic resin. Examples of the thermoplastic resin include a polyolefin resin, a polyester resin, a polyamide resin, a polyether resin, an acrylic resin, and a naturally occurring polymer compound (e.g., cellulose acetate). These resins may be used singly or as a mixture of two or more.

The present disclosure is particularly useful when the thermoplastic resin is a polyolefin resin. In general, if a packaging container is produced with a gas barrier laminate in which the substrate layer contains a polyolefin resin as a thermoplastic resin, and the packaging container is retorted, then interlaminar separation tends to occur. However, the gas barrier laminate according to the present disclosure includes the gas barrier coat layer 4 having greater laminate strength to the substrate layer 1, and thus if a packaging container is produced with the gas barrier laminate 10, and the packaging container is retorted, the gas barrier coat layer 4 does not separate easily from the substrate layer 1.

Although examples of the polyolefin resin include polyethylene and polypropylene, polypropylene is preferable from the standpoint of resistance to retorting. Although the polypropylene may be homopolypropylene or a propylene copolymer (a polypropylene copolymer), a polypropylene copolymer is more preferable from the standpoint of oxygen barrier properties.

Examples of the polyester resin include a polyethylene terephthalate resin (PET) and a polyethylene naphthalate resin (PEN).

Although the substrate layer 1 may be a stretched film or a non-stretched film, a stretched film is preferable from the standpoint of oxygen barrier properties. Although examples of the stretched film include a uniaxially oriented film and a biaxially oriented film, a biaxially oriented film, which improves heat resistance, is preferable.

The substrate layer 1 may have any thickness as long as the thickness is, for example, 0.1 mm or less. In particular, the thickness of the substrate layer 1 is preferably 40 µm or less, more preferably 35 µm or less, and still more preferably 30 µm or less. When the thickness of the substrate layer 1 is 40 µm or less, the gas barrier laminate 10 is more flexible than with a substrate layer 1 having a thickness of more than 40 µm, and the gas barrier laminate 10 may have better oxygen gas barrier properties after abuse. However, the thickness is preferably 10 µm or more, and more preferably 12 µm or more from the standpoint improving strength.

The substrate layer 1 may contain an additive such as an antistatic agent, an ultraviolet absorber, a plasticizer, or a lubricant, as appropriate.

### (Anchor Coat Layer)

The anchor coat layer 2 is a layer for improving the adhesion between the substrate layer 1 and the inorganic oxide layer 3 and provided between the substrate layer 1 and the inorganic oxide layer 3.

The anchor coat layer 2 may be formed from any material as long as the material can improve the adhesion between the substrate layer 1 and the inorganic oxide layer 3, and examples of such materials include a reaction product of an organosilane or an organometallic compound, a polyol compound, and an isocyanate compound. That is, the anchor coat layer 2 may also be referred to as a urethane adhesive layer.

The organosilane is, for example, a trifunctional organosilane or a hydrolysate of a trifunctional organosilane.

The organometallic compound is, for example, a metal alkoxide or a hydrolysate of a metal alkoxide. The organometallic compound contains a metallic element, such as Al, Ti, or Zr.

The hydrolysate of the organosilane and the hydrolysate of the metal alkoxide each contain at least one hydroxyl group.

The polyol compound is preferably an acrylic polyol from the standpoint of transparency.

The isocyanate compound serves mainly as a cross-linking agent or a curing agent.

The polyol compound and the isocyanate compound may be monomers or polymers.

The anchor coat layer 2 may have any thickness as long as the thickness allows improvement in the adhesion between the substrate layer 1 and the inorganic oxide layer 3, and the thickness is preferably 30 nm or more. Unlike an anchor coat layer 2 with a thickness of less than 30 nm, the above thickness allows the surface of the anchor coat layer 2 to be smoother than the surface of the substrate layer 1, enabling the thickness of the inorganic oxide layer 3 to be more uniform and also the oxygen barrier properties to be improved. As a result, the oxygen barrier properties of the gas barrier laminate 10 can be further improved.

The thickness of the anchor coat layer 2 is more preferably 40 nm or more, and still more preferably 50 nm or more. An increase in the thickness of the anchor coat layer 2 can make the water vapor barrier properties less likely to degrade under an external force as a result of, for example, stretching.

The thickness of the anchor coat layer 2 is preferably 300 nm or less. In this case, the gas barrier laminate 10 is more flexible than a laminate including an anchor coat layer 2 with a thickness of more than 300 nm, allowing the gas barrier laminate 10 to have better oxygen gas barrier properties after abuse. The thickness of the anchor coat layer 2 is more preferably 200 µm or less. The thickness of the anchor coat layer 2 may be 150 µm or less, 120 µm or less, 100 µm or less, or 80 µm or less.

### (Inorganic Oxide Layer)

The inorganic oxide layer 3 is a layer containing inorganic oxide. The gas barrier laminate 10, which includes the inorganic oxide layer 3, may have improved gas barrier properties.

Examples of the inorganic oxide include an oxide of at least one metal selected from the group consisting of Si, Al, Mg, Sn, Ti, and In or a non-metal doped metal oxide obtained by adding a non-metal such as carbon or phosphorus to a metal oxide. The inorganic oxide is preferably SiOₓ or AlOₓ from the standpoint of water vapor barrier properties. Among others, the inorganic oxide is preferably SiOₓ. This allows the gas barrier laminate 10 to have better water vapor barrier properties.

The inorganic oxide layer 3 may a monolayer or a multilayer.

The inorganic oxide layer 3 may have any thickness, and the thickness is preferably 5 nm or more. In this case, the gas barrier laminate 10 has better oxygen barrier properties than a laminate including an inorganic oxide layer 3 with a thickness of less than 5 nm.

The thickness of the inorganic oxide layer 3 is more preferably 8 nm or more and yet more preferably 10 nm or more. The thickness of the inorganic oxide layer 3 may be 15 nm or more or 20 nm or more.

The thickness of the inorganic oxide layer 3 is preferably 80 nm or less. In this case, the gas barrier laminate 10 is more flexible than a laminate including an inorganic oxide layer 3 with a thickness of more than 80 nm, allowing the gas barrier laminate 10 to have better oxygen barrier properties after abuse. In addition, the gas barrier laminate 10 may also have better oxygen barrier properties after retorting.

The thickness of the inorganic oxide layer 3 is more preferably 70 nm or less and yet more preferably 60 nm or less. The thickness of the inorganic oxide layer 3 may be 50 nm or less, 40 nm or less, or 30 nm or less.

### (Gas Barrier Coat Layer)

The gas barrier coat layer 4 is a cured body or cured article of a gas barrier coat layer forming composition.

The gas barrier coat layer forming composition contains a water-soluble polymer, a first silicon compound composed of at least one of a silicon alkoxide represented by general formula (1) above and hydrolysates thereof, and a second silicon compound composed of at least one of a silicon alkoxide represented by general formula (2) above and hydrolysates thereof.

Examples of the water-soluble polymer include a polyvinyl alcohol resin, a modified body thereof, and a polyacrylic acid. These may be used singly or as a combination of two or more. Among others, the water-soluble polymer is preferably a polyvinyl alcohol resin or a modified body thereof. In this case, the composition may be cured to provide the gas barrier laminate 10 with better gas barrier properties. Even after cured, the composition may provide the gas barrier laminate 10 with better flexibility and further improve the oxygen barrier properties after abuse.

When the water-soluble polymer is a polyvinyl alcohol resin or a modified body thereof, the water-soluble polymer may have any degree of saponification, and the degree is preferably 95% or more and may be 100% from the standpoint improving the gas barrier properties of the gas barrier laminate 10.

Although the water-soluble polymer has any degree of polymerization, the degree of polymerization is preferably equal to or greater than 300 from the standpoint of improving the gas barrier properties of the gas barrier laminate 10. The degree of polymerization of the water-soluble polymer is preferably 450 to 2,400.

The first silicon compound is composed of at least one of a silicon alkoxide represented by general formula (1) above and hydrolysates thereof. In general formula (1), which represents a silicon alkoxide, R¹ denotes an alkyl group or -C₂H₄OCH₃. Examples of the alkyl group include a methyl group and an ethyl group. Among others, an ethyl group is preferable. In this case, the silicon alkoxide is tetraethoxysilane and can be relatively stable in an aqueous solvent after hydrolysis.

The second silicon compound is composed of at least one of a silicon alkoxide represented by general formula (2) above and hydrolysates thereof. The second silicon compound serves as a curing agent and is also referred to as a silane coupling agent.

In general formula (1), which represents a silicon alkoxide in the second silicon compound, R² denotes a monovalent organic functional group, and R³ denotes an alkyl group or - C₂H₄OCH₃.

This enables improvement in the adhesion between the gas barrier coat layer 4 and the inorganic oxide layer 3 and prevention of delamination in the gas barrier laminate 10.

R² and R³ may be the same or different from each other. R³ may be the same or different from each other.

Examples of the monovalent organic functional group denoted by R² include a monovalent organic functional group containing a vinyl group, an epoxy group, a mercapto group, an amino group, or an isocyanate group. Among others, the monovalent organic functional group is preferably a monovalent organic functional group containing an isocyanate group. In this case, the composition may be cured to have better hot water resistance and provide the gas barrier laminate 10 with greater laminate strength even after retorting.

Examples of the alkyl group denoted by R³ include a methyl group and an ethyl group. Among others, a methyl group is preferable. In this case, hydrolysis occurs quickly.

In the formula, n represents an integer equal to or greater than 1. When n is 1, the second silicon compound represents a monomer, and when n is equal to or greater than 2, the second silicon compound represents a multimer. In the formula, n is preferably 3. This allows the gas barrier coat layer 4 to have higher hot water resistance and the gas barrier laminate 10 to have greater laminate strength even after retorting.

The silicon alkoxide in the second silicon compound is preferably a trimeric 1,3,5-tris(3-trialkoxysilylalkyl)isocyanurate in which R² in general formula (2) above is NCO-R⁴-, R⁴ is an alkylene group having one or more carbon atoms, and n is 3. This improves the moist heat resistance of the gas barrier coat layer 4 and also improves the laminate strength (adhesive strength) of the gas barrier coat layer 4 to the substrate layer 1 after retorting.

The silicon alkoxide in the second silicon compound may be 3-glycidoxypropyltrialkoxysilane in which R² in general formula (2) above is a 3-glycidoxypropyl group and n is 1. This improves the moist heat resistance of the gas barrier coat layer 4 and also improves the laminate strength (adhesive strength) of the gas barrier coat layer 4 to the substrate layer 1 after retorting.

Examples of the silicon alkoxide in the second silicon compound include silane coupling agents having a vinyl group, such as vinyltrimethoxysilane or vinyltriethoxysilane; silane coupling agents having an epoxy group, such as 3-glycidoxypropyltrimethoxysilane, 3-glycidoxypropyltriethoxysilane, 3-glycidoxypropylmethyldimethoxysilane, or 3-glycidoxypropylethyldiethoxysilane; silane coupling agents having a mercapto group, such as 3-mercaptopropyltrimethoxysilane or 3-mercaptopropylmethyldimethoxysilane; silane coupling agents having an amino group, such as 3-aminopropyltrimethoxysilane or 3-aminopropyltriethoxysilane; and silane coupling agents having an isocyanate group, such as 3-isocyanatopropyltriethoxysilane or 1,3,5-tris(3-methoxysilylpropyl)isocyanurate. These second silicon compounds may be used singly or as a combination of two or more.

When the second silicon compound is converted to R²Si(OH)₃, the water-soluble polymer has a mass ratio of 55 to 95% by mass relative to the total mass of the water-soluble polymer and the second silicon compound, and the mass ratio is preferably 60 to 90% by mass and more preferably 75 to 90% by mass. Such a mass ratio tends to improve the oxygen barrier properties after retorting compared with a water-soluble polymer having a mass ratio outside the above range.

When the first silicon compound is converted to SiO₂ and the second silicon compound is converted to R²Si(OH)₃, the first silicon compound has a mass ratio of more than 0% by mass and 89% by mass or less relative to the total mass of the first silicon compound and the second silicon compound, and the mass ratio is preferably 20% by mass or more and 89% by mass or less. In this case, the gas barrier coat layer forming composition may be cured to provide the gas barrier laminate 10 with better gas barrier properties. The mass ratio of the first silicon compound may be more than 0% by mass and 60% by mass or less and may be 20 to 60% by mass. Such a mass ratio tends to improve the oxygen barrier properties after retorting and abuse.

### (Other Components)

The gas barrier coat layer forming composition may further contain known additives as appropriate, such as a dispersant, a stabilizer, a viscosity modifier, or a colorant provided that the additive does not degrade the gas barrier properties of the gas barrier coat layer 4.

### (Liquid)

The gas barrier coat layer forming composition may contain a liquid that dissolves or disperses the solid contents. Such a liquid is typically an aqueous medium. Examples of the aqueous medium include water, a hydrophilic organic solvent, or a mixture thereof. Examples of the hydrophilic organic solvent include alcohols, such as methanol, ethanol, and isopropanol; ketones, such as acetone and methyl ethyl ketone; ethers, such as tetrahydrofuran; cellosolves; carbitols; and nitriles, such as acetonitrile. These may be used singly or as a combination of two or more.

The aqueous medium is preferably an aqueous medium consisting of water or an aqueous medium containing water as a main component. For an aqueous medium containing water as a main component, the water content of the aqueous medium is preferably 70% by mass or more and more preferably 80% by mass or more.

Although the gas barrier coat layer 4 may have any thickness, the thickness is preferably 50 nm or more.

In this case, the gas barrier laminate 10 has better oxygen barrier properties than a laminate including a gas barrier coat layer 4 with a thickness of less than 50 nm.

The thickness of the gas barrier coat layer 4 is more preferably 100 nm or more and yet more preferably 200 nm or more from the standpoint of improving the gas barrier properties.

On the other hand, the thickness of the gas barrier coat layer 4 is preferably 700 nm or less. Such a thickness enables the gas barrier laminate 10 to be more flexible than a laminate including a gas barrier coat layer 4 with a thickness of more than 700 nm, allowing the gas barrier laminate 10 to have better oxygen barrier properties after abuse. In addition, the gas barrier laminate 10 may also have better oxygen barrier properties after retorting.

The thickness of the gas barrier coat layer 4 is more preferably 500 nm or less and yet more preferably 400 nm or less from the standpoint of improving the flexibility of the gas barrier laminate 10.

### <Method for Producing Gas Barrier Laminate>

A method for producing the gas barrier laminate 10 will now be described.

First, the substrate layer 1 is prepared.

Next, the anchor coat layer 2 is formed over the surface of the substrate layer 1.

Specifically, an anchor coat layer forming composition for forming the anchor coat layer 2 is applied to the surface of the substrate layer 1 and dried by heating to form the anchor coat layer 2. The heating temperature is, for example, 50 to 200 °C, and the drying time is, for example, about ten seconds to ten minutes.

Then, the inorganic oxide layer 3 is formed on the anchor coat layer 2.

The inorganic oxide layer 3 may be formed by, for example, a vacuum deposition method. Examples of the vacuum deposition method include physical vapor deposition and chemical vapor deposition. Examples of the physical vapor deposition method include vacuum evaporation, sputter deposition, and ion plating.

The physical vapor deposition method is preferably vacuum evaporation. Examples of the vacuum evaporation method include resistance heating vacuum deposition, EB (electron beam) heating vacuum deposition, and induction heating vacuum deposition.

Examples of the chemical vapor deposition method include heating CVD, plasma CVD, and optical CVD.

Then, the gas barrier coat layer 4 is formed on the inorganic oxide layer 3.

The gas barrier coat layer 4 may be formed by, for example, applying the gas barrier coat layer forming composition to the inorganic oxide layer 3 and curing the composition. The curing of solid contents herein refers to the integration of the first silicon compound and the water-soluble polymer or the first silicon compound, the water-soluble polymer, and the second silicon compound in the solid contents by reacting with each other. The gas barrier coat layer forming composition is prepared in such a way that the composition contains the water-soluble polymer, the first silicon compound, and the second silicon compound, the mass ratio of the water-soluble polymer relative to the total mass of the water-soluble polymer and the second silicon compound is 55 to 95% by mass when the second silicon compound is converted to R²Si(OH)₃, and the mass ratio of the first silicon compound relative to the total mass of the first silicon compound and the second silicon compound is more than 0% by mass and 89% by mass or less when the first silicon compound is converted to SiO₂ and the second silicon compound is converted to R²Si(OH)₃.

The gas barrier coat layer forming composition may be applied by a known application method. Specific examples of the application method include wet coating, such as gravure coating, dip coating, reverse coating, bar coating, or die coating.

The curing may be performed by, for example, heating.

When the curing is performed by heating, the heating temperature and the heating time are set in such a way as to cure the solid contents in the gas barrier coat layer forming composition and remove the liquid, such as the aqueous medium, at the same time. The heating temperature is, for example, 80 to 250 °C, and the heating time is, for example, three seconds to ten minutes.

In this manner, the gas barrier laminate 10 is prepared.

### <Packaging Film>

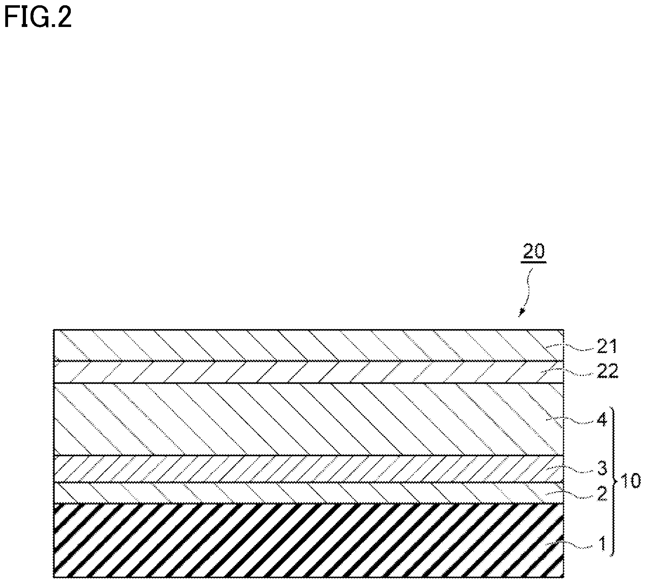

Next, a packaging film according to an embodiment of the present disclosure will now be described with reference to Fig. 2. In Fig. 2, the same components as in Fig. 1 are designated with the same reference numerals, and redundant description thereof is omitted.

Fig. 2 is a cross-sectional view of the packaging film according to an embodiment of the present disclosure. As illustrated in Fig. 2, a packaging film 20 includes the gas barrier laminate 10 and a sealant layer 21 disposed on the gas barrier laminate 10, and the sealant layer 21 is applied to the substrate layer 1 of the gas barrier laminate 10 on the side adjacent to the gas barrier coat layer 4. As illustrated in Fig. 2, the gas barrier coat layer 4 in the gas barrier laminate 10 and the sealant layer 21 may be bonded together with an adhesive layer 22.

The packaging film 20 has good laminate strength after retorting and also good oxygen barrier properties after retorting and abuse because the gas barrier laminate 10 is included.

The material for the adhesive layer 22 may be, for example, a polyester-isocyanate resin, a urethane resin, or a polyether resin. If the packaging film 20 is to be subjected to retorting, it is preferable to use a two-component urethane adhesive resistant to retorting.

### (Sealant Layer)

Examples of the material for the sealant layer 21 include thermoplastic resins, such as a polyolefin resin and a polyester resin, and a polyolefin resin is typically used. Specifically, the polyolefin resin may be an ethylene resin such as a low density polyethylene resin (LDPE), a medium density polyethylene resin (MDPE), a linear low density polyethylene resin (LLDPE), an ethylene-vinyl acetate copolymer (EVA), an ethylene-α olefin copolymer, or an ethylene-(meth)acrylic copolymer, a polypropylene resin such as a homopolypropylene resin (PP), a propylene-ethylene random copolymer, a propylene-ethylene block copolymer, or a propylene-α olefin copolymer, or a mixture thereof. The material for the sealant layer 21 may be selected as appropriate from the above thermoplastic resins depending on the use and boiling or retorting temperature conditions.

Although the thermoplastic resin of the sealant layer 21 may or may not be stretched, the thermoplastic resin should not be stretched from the standpoint of lowering the melting point to facilitate heat sealing.

The thickness of the sealant layer 21 is determined as appropriate depending on, for example, the mass of the contents and the shape of the packaging bag and not limited to a particular thickness. The thickness of the sealant layer 21 may be 30 µm or more, 40 µm or more, or 50 µm or more. The thickness of the sealant layer 21 may also be 150 µm or less, 120 µm or less, 100 µm or less, or 80 µm or less. The thickness of the packaging film 20 is preferably 30 to 150 µm from the standpoint of flexibility and adhesiveness.

### <Packaged Product>

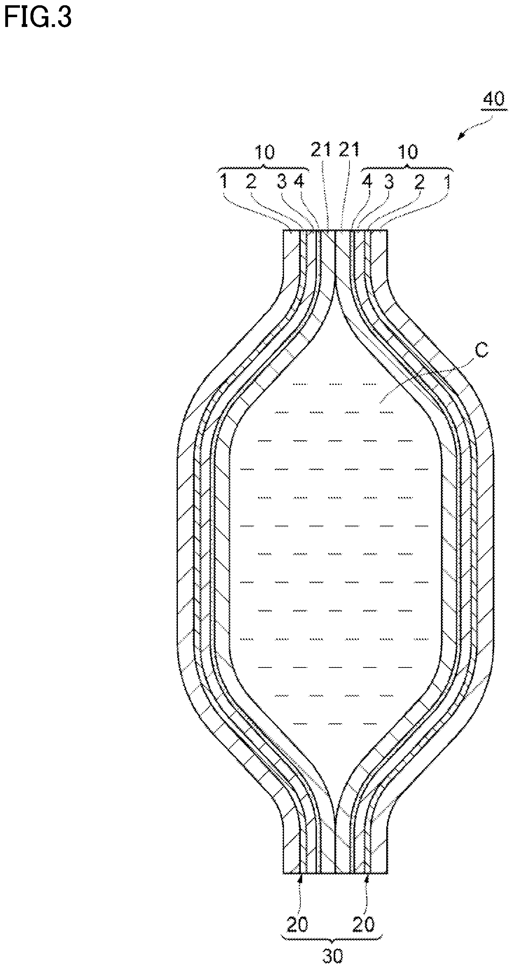

Next, a packaged product according to an embodiment of the present disclosure will now be described with reference to Fig. 3. Fig. 3 is a side view of a packaged product according to an embodiment of the present disclosure. In Fig. 3, the same components as in Fig. 1 or 2 are designated with the same reference numerals, and a redundant description thereof is omitted.

As illustrated in Fig. 3, a packaged product 40 includes a packaging container 30 and contents C contained in the packaging container 30. The packaging container 30 illustrated in Fig. 3 is produced by preparing a pair of packaging films 20 and heat-sealing the edges of the packaging films 20 with the sealant layers 21 facing each other. In Fig. 3, the adhesive layer 22 of each packaging film 20 is not illustrated.

Since the packaged product 40 includes the packaging container 30, the gas barrier coat layer 4 does not peel off easily even after retorting, and even if force to deform the packaging film 20 is applied after retorting, oxygen does not enter the contents C, and no oxygen ingress degrades the contents C for a long period of time.

The packaging container 30 may also be produced by folding a single packaging film 20 and heat-sealing the edges of the packaging film 20 with one part of the sealant layer 21 facing the other.

Examples of the packaging container 30 include a packaging bag, a laminate tube container, or a paper container for liquid.

Examples of the contents C include, but are not limited to, food, liquid, drugs, and electronic components.

The present disclosure is not limited to the above embodiments. For example, although the sealant layer 21 of the packaging film 20 in the above embodiment is disposed on the substrate layer 1 of the gas barrier laminate 10 on the side adjacent to the gas barrier coat layer 4, the sealant layer 21 may be applied to the substrate layer 1 on the side facing away from the gas barrier coat layer 4.

### Examples

Although the present disclosure is described in detail below with examples, the present disclosure is not limited to the examples.

### <Preparation of Coating Liquid>

Coating liquids A to D for preparing gas barrier coat layer forming compositions used in examples or comparative examples were prepared as described below.

### (Coating Liquid A)

Polyvinyl alcohol (trade name: "Kuraray Poval 60-98," manufactured by Kuraray Co., Ltd., hereinafter also referred to as PVA) was mixed with water to prepare coating liquid A with the solid contents accounting for 5% by mass.

### (Coating Liquid B)

Tetraethoxysilane (trade name: "KBE04," solid contents: 100%, Shin-Etsu Chemical Co., Ltd., hereinafter also referred to as TEOS) as the silicon alkoxide (the first compound), methanol (Kanto Chemical), and 0.1 N hydrochloric acid (Kanto Chemical Co., Inc.) were mixed to a mass ratio of 17/10/73 to prepare coating liquid B with the solid contents accounting for 5% by mass. The percentage of the solid contents was calculated with TEOS converted to SiO₂.

### (Coating Liquid C1)

As the silane coupling agent (SC agent A), 1,3,5-tris(3-methoxysilylpropyl)isocyanurate was added to a mixed solvent of water/IPA = 1/1 (mass ratio) to produce coating liquid C1 with the solid contents accounting for 5% by mass. The percentage of the solid contents was calculated with SC agent A converted to NCO(CH₂)₃Si(OH)₃.

### (Coating Liquid C2)

To an isopropanol (IPA) solution of 3-glycidoxypropyltrimethoxysilane as the silane coupling agent (SC agent B), 0.1 N hydrochloric acid (manufactured by Kanto Chemical Co., Inc.) was added. The resultant solution was stirred for 30 minutes to hydrolyze the SC agent B and then added to a mixed solvent of water/IPA = 1/1 (mass ratio) to produce a coating liquid C2 with the solid contents accounting for 5% by mass. The percentage of the solid contents was calculated with the SC agent B converted to (CH₂O)CH₂OC₃H₆Si(OH)₃.

### <Preparation of Anchor Coat Layer Forming Composition>

The anchor coat layer forming composition was prepared as described below.

Acrylic polyol and tolylene diisocyanate were mixed so that the number of NCO groups in the tolylene diisocyanate was equal to the number of OH groups in the acrylic polyol, and the mixture was diluted with ethyl acetate so that the solid contents (the total amount of the acrylic polyol and the tolylene diisocyanate) accounted for 5% by mass. To the diluted mixed solution, β-(3,4-epoxycyclohexyl)trimethoxysilane was further added in an amount of 5 parts by mass with respect to 100 parts by mass of the total amount of the acrylic polyol and the tolylene diisocyanate, and they were mixed to prepare an anchor coat layer forming composition (anchor coat agent).

### <Production of Gas Barrier Laminate>

### (Example 1)

First, a biaxially oriented polypropylene film (trade name, "ME-1," manufactured by Mitsui Chemicals Tohcello Co., Ltd.) as a 20 µm thick substrate layer was coated with the anchor coat agent prepared as described above to a thickness of 50 nm, and the anchor coat agent was heated at 100°C and then dried to form an anchor coat layer. Next, silicon oxide was deposited on the anchor coat layer as an inorganic oxide in an electron beam vacuum deposition process by electron beam heating to form a 25 nm thick inorganic oxide layer, producing a laminate.

Then, coating liquids A, B, and C1 were mixed to prepare a mixed solution in which the mass ratio of the water-soluble polymer relative to the total mass of the water-soluble polymer and the second silicon compound (hereinafter also referred to as the water-soluble polymer mass ratio X1) and the mass ratio of the first silicon compound relative to the total mass of the first silicon compound and the second silicon compound (hereinafter also referred to as the first silicon compound mass ratio X2) were the corresponding percentages listed in Table 1. The mixed solution was applied by bar coating to the surface of the inorganic oxide layer in the laminate to form a gas barrier coat layer having a thickness of 400 nm. In this manner, a gas barrier laminate was produced including the inorganic oxide layer, the substrate layer, the anchor coat layer, the inorganic oxide layer, and the gas barrier coat layer stacked in this order.

### (Examples 2, 4, and 5)

A gas barrier laminate was produced in the same manner as in Example 1 except that coating liquids A, B, and C1 were mixed to prepare a mixed solution in which the water-soluble polymer mass ratio X1 and the first silicon compound mass ratio X2 were the corresponding percentages listed in Table 1.

### (Examples 3 and 6)

A gas barrier laminate was produced in the same manner as in Example 1 except that coating liquids A, B, and C1 were mixed to prepare a mixed solution in which the water-soluble polymer mass ratio X1 and the first silicon compound mass ratio X2 were the corresponding percentages listed in Table 1, and no anchor coat layer was formed.

### (Example 7)

A gas barrier laminate was produced in the same manner as in Example 1 except that coating liquids A, B, and C2 were mixed to prepare a mixed solution in which the water-soluble polymer mass ratio X1 and the first silicon compound mass ratio X2 were the corresponding percentages listed in Table 1.

### (Comparative Examples 1 to 3)

A gas barrier laminate was produced in the same manner as in Example 1 except that coating liquids A, B, and C1 were mixed to prepare a mixed solution in which the water-soluble polymer mass ratio X1 and the first silicon compound mass ratio X2 were the corresponding percentages listed in Table 1.

### <Production of Laminate Film>

A 60 µm thick unstretched polypropylene film (trade name, "Torayfan (registered trademark) ZK207," manufactured by Toray Industries, Inc.) was attached to the surface of the substrate layer in each of the gas barrier laminates obtained in Examples 1 to 7 and Comparative Examples 1 to 3 with a two-component adhesive (trade name, "Takelac A-525/Takenate A-52," manufactured by Mitsui Chemicals & SKC Polyurethanes Inc.) to produce a laminate film having a surface width of 210 mm.

### <Evaluation of Laminate Film>

The oxygen barrier properties and the laminate strength of the laminate film thus obtained were evaluated as described below.

### (1) Oxygen Barrier Properties

The laminate film produced as described above was evaluated for oxygen barrier properties after retorting and oxygen barrier properties after retorting and abuse in the manner described below.

### (1-1) Oxygen Barrier Properties after Retorting

### (Production of Test Sample)

In order to evaluate oxygen barrier properties after retorting, a test sample A was first produced as described below.

First, a 315 mm by 230 mm sheet was cut out from the laminate film produced as described above, and the sheet was used to produce a three-sided pouch having an opening. This three-sided pouch was formed by folding the laminate film so that one part of the unstretched polypropylene film faced the other, and heat-sealing the parts of the unstretched polypropylene film. Then, the three-sided pouch was filled with water through the opening, and the opening of the three-sided pouch was sealed. In this manner, the test sample A was produced.

### (Retorting)

The test sample A thus obtained was retorted at 121 °C for 30 minutes.

### (Measurement of Oxygen Transmission Rate)

The oxygen transmission rate of the retorted test sample A was measured with an oxygen transmission rate measurement device (product name, "OX-TRAN2/20," manufactured by MOCON) at a temperature of 30 °C and a relative humidity of 70%. This measurement was performed in accordance with JIS K-7126-2. The results are listed in Table 1.

### (1-2) Oxygen Barrier Properties after Retorting and Abuse

### (Production of Test Sample)

A 295 mm by 210 mm sheet was cut out from the top of the test sample A retorted as described above, and the sheet was taken as a test sample B.

### (Abuse Test)

The test sample B was subjected to abuse by conducting an abuse test (Gelboflex test) as described below.

That is, the test sample B above was first set on the fixed head of a Gelboflex tester (manufactured by Tester Sangyo Co., Ltd.) into the form of a cylinder with a diameter of 87.5 mm and a height of 210 mm to produce a cylindrical body. With the initial grip interval set to 175 mm and the stroke set to 87.5 mm, the cylindrical body held at both ends was twisted 440 degrees five times in a reciprocating motion at a rate of 40 times/min. The abuse test was conducted in this manner.

### (Measurement of Oxygen Transmission Rate)

The oxygen transmission rate of the test sample B after abuse was measured in the same manner as the above-described oxygen transmission rate after retorting. The results are listed in Table 1.

### (2) Laminate Strength

First, the test sample A produced as described above was measured for laminate strength in accordance with JIS Z-1707.

Specifically, the test sample A was cut into a narrow strip with a width of 15 mm as a cut sample. Next, a Tensilon universal testing machine (product name, "Tensilon RTC-1250," manufactured by Orientec Corporation) was used to pull the gas barrier coat layer of the cut sample and the remaining part from each other in opposite directions at a peel rate of 300 mm/min so that the peeled gas barrier coat layer and remaining part and the unpeeled part formed a T shape, and the strength required for peeling (unit: N/15 mm) was measured as the laminate strength. The results are listed in Table 1.

**[Table 1]**

| | Anchor coat layer | Gas barrier coat layer | | | | Evaluation | | |
|---|---|---|---|---|---|---|---|---|
| | | Mixed solution | Second silicon compound in mixed solution (SC agent) | Water-soluble polymer mass ratio X1 | First silicon compound mass ratio X2 | Oxygen barrier properties | | Laminate strength |
| | | | | Mass% | Mass% | Oxygen transmission rate after retorting (cc/m²/day/atm) | Oxygen transmission rate after retorting and abuse test (cc/m²/day/atm) | N/15 mm |
| EX. 1 | Included | A/B/C1 | A | 95 | 55 | 2.0 | 4.5 | 2.1 |
| EX. 2 | included | A/B/C1 | A | 79 | 20 | 0.8 | 4.8 | 2.5 |
| EX. 3 | - | A/B/C1 | A | 77 | 77 | 1.1 | 7.4 | 2.7 |
| EX. 4 | Included | A/B/C1 | A | 77 | 77 | 0.8 | 6.8 | 2.9 |
| EX. 5 | Included | A/B/C1 | A | 84 | 89 | 0.8 | 8.8 | 3.4 |
| EX. 6 | - | A/B/C1 | A | 62 | 71 | 1.0 | 9.3 | 3.5 |
| EX. 7 | Included | A/B/C2 | B | 83 | 83 | 0.5 | 6.3 | 3.1 |
| COMP. EX. 1 | Included | A/B/C1 | A | 100 | 100 | 2.6 | 4.5 | 1.1 |
| COMP. EX. 2 | Included | A/B/C1 | A | 78 | 90 | 0.7 | 10.9 | 3.3 |
| COMP. EX. 3 | Included | A/B/C1 | A | 45 | 45 | 5.7 | 12.8 | 3.7 |

As listed in Table 1, the gas barrier laminates in Examples 1 to 7 were found to have superior laminate strength after retorting and a low oxygen transmission rate after retorting and abuse. In contrast, the gas barrier laminates in Comparative Examples 1 to 3 were found to have low laminate strength after retorting or a high oxygen transmission rate after retorting and abuse.

As stated above, the gas barrier laminate according to the present disclosure has been confirmed to have good laminate strength after retorting and also good oxygen barrier properties after retorting and abuse.

### [Reference Signs List]

- 1: Substrate layer
- 3: Inorganic oxide layer
- 4: Gas barrier coat layer
- 10: Gas barrier laminate
- 20: Packaging film
- 21: Sealant layer
- 30: Packaging container
- 40: Packaged product

## Claims

1. A gas barrier laminate comprising:
a substrate layer containing a thermoplastic resin;
an inorganic oxide layer; and
a gas barrier coat layer in this order,
wherein the gas barrier coat layer is a cured article of a gas barrier coat layer forming composition,
the gas barrier coat layer forming composition includes
a water-soluble polymer,
a first silicon compound composed of at least one of a silicon alkoxide represented by general formula (1) below and hydrolysates thereof, and
a second silicon compound composed of at least one of a silicon alkoxide represented by general formula (2) below and hydrolysates thereof,
the water-soluble polymer has a mass ratio of 55 to 95% by mass relative to a total mass of the water-soluble polymer and the second silicon compound when the second silicon compound is converted to R²Si(OH)₃, and
the first silicon compound has a mass ratio of more than 0% by mass and 89% by mass or less relative to a total mass of the first silicon compound and the second silicon compound when the first silicon compound is converted to SiO₂ and the second silicon compound is converted to R²Si(OH)₃:
Si(OR¹)₄ ... (1)
(R²Si(OR³)₃)ₙ ... (2)
(in general formulas (1) and (2) above, R¹ and R³ each denote an alkyl group or -C₂H₄OCH₃, and R² denotes an organic functional group; n represents an integer equal to or greater than 1).

2. The gas barrier laminate according to claim 1, wherein
the mass ratio of the first silicon compound relative to the total mass of the first silicon compound and the second silicon compound is 20% by mass or more and 89% by mass or less when the first silicon compound is converted to SiO₂ and the second silicon compound is converted to R²Si(OH)₃.

3. The gas barrier laminate according to claim 1 or 2, wherein
the mass ratio of the water-soluble polymer relative to the total mass of the water-soluble polymer and the second silicon compound is 75 to 90% by mass when the second silicon compound is converted to R²Si(OH)₃.

4. The gas barrier laminate according to any one of claims 1 to 3, wherein
the thermoplastic resin is a polyolefin resin.

5. The gas barrier laminate according to any one of claims 1 to 4, wherein
the silicon alkoxide in the second silicon compound is a trimeric 1,3,5-tris(3-trialkoxysilylalkyl)isocyanurate in which R² in general formula (2) above is NCO-R⁴-, R⁴ is an alkylene group having one or more carbon atoms, and n is 3.

6. The gas barrier laminate according to any one of claims 1 to 4, wherein
the silicon alkoxide in the second silicon compound is a 3-glycidoxypropyltrialkoxysilane in which R² in general formula (2) above is a 3-glycidoxypropyl group, and n is 1.

7. The gas barrier laminate according to any one of claims 1 to 6, further comprising:
an anchor coat layer between the substrate layer and the inorganic oxide layer.

8. A packaging film comprising:
the gas barrier laminate according to any one of claims 1 to 7; and
a sealant layer.

9. A packaging container comprising
the packaging film according to claim 8.

10. A packaged product comprising:
the packaging container according to claim 9; and
contents contained in the packaging container.
